# EUROPEAN PATENT APPLICATION

(11) **EP 3 696 692 A1**
(43) Date of publication of application: **19.08.2020**
(21) Application number: 19157733.7
(22) Date of filing: 18.02.2019
(51) Int. Cl.: G06F 17/22, G06F 9/451

(54) **AUTOMATIC GENERATION OF SYSTEM MANUALS**

(71) Applicant: Siemens Aktiengesellschaft, 80333 München (DE)
(72) Inventor: Aigner, Tobias, 81543 München (DE); Sauer, Markus, 81739 München (DE); Zupan, Nejc, 80337 München (DE)

(57) **Abstract**

The present invention relates to a computer-implemented method of and system for generating automatically a manual for a target system, in particular for an industrial target system. A hierarchical representation of the target system is derived. Based on the derived hierarchical representation the manual for the target system is generated.

## Description

The present invention relates to a computer-implemented method of and system for generating automatically a manual for a target system, in particular for an industrial target system.

Systems and in particular industrial systems (e.g. factory production lines, electronic devices, etc.) may comprise a large number of sub-systems and components. In such systems having a large number of components organizing a system manual or documentation requires a lot of effort. Producing such manual can be complicated and time-consuming. Furthermore, if the system is dynamic in its composition, often the documentation does not reflect the current configuration of the system and is therefore outdated or invalid.

For systems having a large number of components a large set of manuals is composed that describe all or at least the most common configurations of the system. Arranging and maintaining manuals for complex systems to be in an up to date state requires an extensive manual work and is extremely error prone.

It is therefore an objective of the present invention to provide a computer-implemented method of generating automatically a manual for a target system according to independent claim 1 and a system for generating automatically a manual for a target system according to the further independent claim. Refinements of the present invention are subject of the dependent claims.

According to a first aspect of the present invention a computer-implemented method of generating automatically a manual for a target system, comprises the following steps:
- Deriving a hierarchical representation of the target system by means of traversing hierarchically through a component tree of the target system.
- Registering the hierarchical representation to a manual registration component (MR).
- Generating the manual for the target system based on the hierarchical representation stored in the MR and specifications of components of the target system.
- Storing the generated manual for the target system in a file storage (FS).

According to a second aspect of the present invention a system for generating automatically a manual for a target system is arranged and configured for executing the computer-implemented method as described above. The system comprises a system component (SC), a manual registration component (MR), a manual registration module (MG) and a file storage (FS). The SC is arranged and configured for deriving a hierarchical representation of the target system by means of traversing hierarchically through a component tree of the target system. The SC is further arranged and configured for registering the hierarchical representation to the MR. The MG is arranged and configured for generating the manual for the target system based on the hierarchical representation stored in the MR and specifications of components of the target system. The MG is further arranged and configured for storing the generated manual for the target system in the FS.

The target system (e.g. an industrial target system like a production line) comprises many sub-systems and components. The target system may comprise at least one of a controller (e.g. a computer) controlling the target system, an actor (e.g. a component carrying out a task), a sensor (e.g. a component monitoring a state of the target system), a power supply or power generator and the like. The components are connected to each other in a hierarchical manner. For example the controller may be connected with all the other components. There may be a deeper hierarchy when several sub-systems each having sub-controllers are connected in a more complex target system. Consequently, all the interconnected components of the target system form a hierarchical tree of components of the target system.

The computer-implemented method and system according to the present invention may use a distributed database (e.g. blockchain) for registering and generating the manual for the target system.

The hierarchical representation is derived by traversing through the component tree of the target system. Thereto, the SC checks every single component of the component tree regarding its type and location in the target system. The SC may be a separate component within the target system like a computer located at a root of the component tree or a program running on a root component (of the component tree) of the target system (like the controller of the target system). The SC may fetch information (location and type) about each component from the component tree. For example the SC may fetch a hardware identifier (ID) of each component of the target system. The hardware ID is a unique number for identifying components (e.g. a manufacturer ID).

Starting from the root (component) of the component tree, each component of the next or rather subsequent layer of the component tree is identified, for example by its hardware ID. After one layer of the component tree is completely identified, the components of the next/subsequent layer of the component tree are identified in the same way. In this manner, the component tree is traversed from the root (component) up to the components of the last layer of the component tree. Based on the information gathered while traversing through the component tree the hierarchical representation of the target system is generated.

The hierarchical representation of the target system is registered to the MR. In the MR the (current) hierarchical representation may be identified by a representation identifier (ID). The representation ID may be a check sum of the hardware IDs of each component of the target system. The MR may be decentralised and/or a smart contract in a blockchain.

Based on the derived hierarchical representation of the target system in the MR the manual of the target system is automatically generated (by the MG). Thereto, the specifications or component manuals of the components of the target system are fetched for example from a central or decentralised repository or database (e.g. SQL database or IPFS) of the specifications of the components. Alternatively the component manuals may be registered in the FS or the repository/database of the specifications of the components may also be contained by the FS. The manual of the target system is synthesised by merging the specifications of the components according to their location in the hierarchical representation.

The generated manual of the target system is stored in the FS. The FS may be a database (e.g. SQL) or a decentralised file storage system (e.g. IPFS). The generated manual for the target system may also be registered to the FS before the step of storing. For example, the generated manual may be registered in the FS with a hash total of its content.

With the computer-implemented method and system according to the first and second aspect of the present invention the manual of a target system need not be manually generated and consequently, time and costs can be saved. Additionally, human errors in generating the manual of a target system can be avoided. This automatic generation of manuals produces reliable manuals for any kind of target system no matter the size.

According to a refinement of the present invention the computer-implemented method further comprises the following steps:
- Detecting whether a composition of the target system is changed.
- Executing the steps of deriving the hierarchical representation, registering the hierarchical representation, generating the manual and storing the generated manual each time a change of the composition of the target system is detected.

According to a further refinement of the present invention the SC is further arranged and configured for detecting whether a composition of the target system is changed.

The composition of the target system may be changed during its lifetime. For example a component of the target system may be replaced with another component (e.g. due to damage) or a component of the target system may be completely removed (e.g. not needed anymore). Also the system may be extended by a new component (e.g. changed production process). Such modification of the target system is detected by the SC. For example when a component is unplugged from the target system the missing component can be detected by a change in the electrical characteristics of the component to which the unplugged component was connected before. Likewise, a new component can be detected when it is connected to the target system because the electrical characteristics of the component to which the new component is connected change. These changes in the electrical characteristics can be detected for example by micro controllers of the components. Further, when a component is replaced a change of the hardware ID occurs that can be detected by the SC. Also, in case a component is unplugged the corresponding hardware ID disappears and in case a component is added to the target system a new hardware ID appears. Based on these changes in the hardware ID updating the manual of the target system can be triggered.

As soon as the SC detects a change in the composition of the target system, the hierarchical representation is again derived (by the SC) and based on the updated hierarchical representation an updated manual of the target system is generated as described above. The updated hierarchical representation may be registered in the MR with the new check sum of hardware IDs as representation ID. Thus, the updated or current hierarchical representation can be distinguished from the hierarchical representation of the former target system.

Due to the automatic detection of changes in the target system, the manual for the target system is automatically updated. Consequently, the manual of the target system is never outdated.

According to a refinement of the present invention the computer-implemented method further comprises the following step:
- Registering component manuals for components of the target system to the FS.

According to a further refinement of the present invention the system further comprises a manual component (MC). The MC is arranged and configured for registering component manuals for components the target system to the FS.

The component manuals for the components of the target system are registered in the FS (by the MC). The registering of the component manuals can be executed as initial step. Thus, the component manuals can be identified and fetched form the FS during generation of the manual for the target system.

According to a refinement of the present invention the step of registering the component manuals for the components of the target system is based on a hash total of the content of the respective component manuals.

In order to be able to unambiguously identify the (updated/current) component manuals of the components of the target system, the component manuals are registered in the FS with the hash total (check sum) of the content of the component manual that is to be registered.

According to a refinement of the present invention the computer-implemented method further comprises the following steps:
- Exploring the component tree of the target system.
- Storing the explored component tree of the target system.

According to a further refinement of the present invention t the SC is further arranged and configured for exploring the component tree of the target system and for storing the explored component tree of the target system.

Before (or concurrently with) the traversing through the component tree of the target system the component tree is explored (by the SC). Thereto, the SC checks every single component of the target system regarding its type and location in the component tree and optionally further regarding its functionality and/or task within the target system. The SC may contact every single component and fetch information about the component. For example the SC may fetch the hardware ID of each component of the target system. The hardware ID is a unique number for identifying components. The SC may comprise a piece of hardware in each single component of the target system or a piece of software running on each single component (e.g. micro controller of each single component) of the target system which pieces of hardware or software may jointly identify each single component and their location within the target system. For example the SC may fetch besides the hardware ID of each component of the target system also more detailed information about each component of the target system (e.g. what a sensor measures and whereto it reports the measurements, what an actor produces, etc.). The explored component tree is stored (e.g. in the FS) as a virtual image of the target system.

Starting from the root component of the target system, each component of the next or rather subsequent layer of the target system is explored, for example its hardware ID is requested. Further, the components connected to the components of the currently inspected layer (e.g. sensors and actors connected to the controller of a sub-system of the target system) are explored based on information provided by the components (e.g. controller of sub-system providing info about how many/which components are connected to it) of the currently inspected layer of the target system. After one layer of the target system is completely identified, the components of the next/subsequent layer of the target system are identified in the same way. In this manner, the target system is explored from the root (component) up to the components of the last layer of the target system.

With the stored component tree of the target system the hierarchical representation for generating the manual can be derived. Further, the manual of the target system can be supplemented with or further specified by the component tree.

According to a refinement of the present invention the computer-implemented method is executed for multiple target systems, wherein the target systems are owned by different entities.

In case the computer-implemented method according to the present invention is executed for more than one target system and especially for more than one target system owned by different entities (e.g. different companies, institutions, etc. using the same computer-implemented method of (or system for) automatically generating manuals for target systems) the costs for automatically generating manuals can be reduced due to the shared infrastructure for executing the computer-implemented method.

According to a refinement of the present invention the computer-implemented method further comprises the following steps:
- Generating an audit trail documentation for the target system based on a history of the hierarchical representations of the target system registered in the MR.
- Storing the generated audit trail documentation for the target system in the FS.

According to a further refinement of the present invention the system further comprises an audit trail generation component (AG). The AG is arranged and configured for generating an audit trail documentation for the target system based on a history of the hierarchical representations of the target system registered in the MR. The MG is further arranged and configured for storing the generated audit trail documentation for the target system in the FS.

For audit trails a documentation or report of the changes to the target system has to be provided. The documentation is automatically generated (by the AG) based on the hierarchical representations registered in the MR. The hierarchical representations of the target system may be identified based on their hash total. The hierarchical representations may contain a time stamp of the date and time when the change to the target system occurred. Based on the hierarchical representations of the target system the respective composition of the target system (and the respective date and time) can be tracked in the audit trail documentation. Further, the audit trail documentation may include a history, updates, revisions and change owners.

Due to the automatic generation of the audit trail documentation for the target system human errors during manual generation of such documentation can be avoided. Thus, a consistent tamper proof audit trail documentation containing each transaction owner can be provided.

According to a refinement of the present invention the SC comprises at least one hardware component of the target system and additionally or alternatively a software component running on at least one hardware component of the target system capable of identifying all hardware components of the target system.

The SC comprises a piece of hardware in at least one or each single component of the target system. Additionally or alternatively the SC comprises a piece of software running on at least one or each single component (e.g. on its micro controller) of the target system which piece(s) of hardware or software identify each single component and their location within the target system. For example the SC may fetch besides the hardware ID of each component of the target system also more detailed information about each component of the target system (e.g. what a sensor measures and whereto it reports the measurements, what an actor produces, etc.). Starting from the root component of the target system, each component of the next or rather subsequent layer of the target system is explored as described above.

With the piece of hardware in at least one component of the target system the automatic generation of the manual of the target system can be provided as an integral capability of a new system or new component for a target system. With the piece of software running on at least one component of the target system the automatic generation of the manual of the target system can be provided for already existing systems (retrofitting).

According to a refinement of the present invention the SC comprises at least one root hardware component of the target system, wherein each hard ware component of the target system comprises an unique hardware identifier (ID), wherein the at least one root component can identify all hardware components connected to itself based on their unique hardware IDs. Starting from the root component the SC can explore or identify all components of the target system based on their hardware ID as described above.

The present invention and its technical field are subsequently explained in further detail by exemplary embodiment shown in the drawings. The exemplary embodiments only conduce better understanding of the present invention and in no case are to be construed as limiting for the scope of the present invention. Particularly, it is possible to extract aspects of the subject-matter described in the figures and to combine it with other components and findings of the present description or figures, if not explicitly described differently. Equal reference signs refer to the same objects, such that explanations from other figures may be supplementally used.
- Fig. 1: shows a schematic flow-chart of an embodiment of the computer-implemented method of automatically generating manuals for target systems.
- Fig. 2: shows a schematic view of an embodiment of the system for automatically generating manuals for target systems.

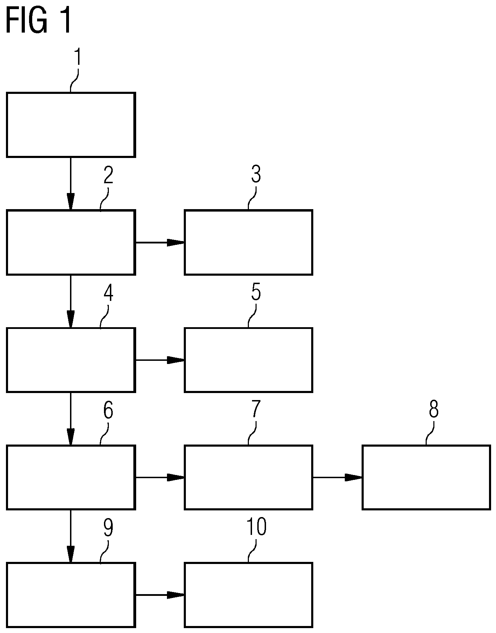

In Fig. 1 the computer-implemented method of automatically generating manuals for target systems is schematically depicted. The computer-implemented method comprises the steps of detecting 1, exploring 2, storing 3 the component tree, deriving 4, registering 5 the hierarchical representation, generating 6 a manual, registering 7 the manual, storing 8 the manual, generating 9 an audit trail documentation, 10 storing the audit trail documentation

A target system is monitored and any change in the composition of the target system is detected in the step of detecting 1. Thereby removing, adding and replacing a component of the target system are continuously detected. The components of the target system may be detected based on a unique hardware identifier (ID) like a manufacturer ID.

In case a change in the composition of the target system was detected or initially, when the system is completely setup for the first time, the component tree of the target system is explored in the step of exploring 2. All components connected to the system are explored/identified and their locations within the target system are derived. Based on this information about each component of the target system the component tree (virtual image) of the target system is established.

The explored component tree is stored (for example in a file storage (FS)) in the step of storing 3.

Based on the stored component tree of the target system the hierarchical representation of the target system is derived in the step of deriving 4. Each component and its location in the target system are derived by traversing through the component tree (e.g. based on the hardware IDs of the components) and thereby the hierarchical representation of the target system is layer-wise derived.

The hierarchical representation of the target system is registered in a manual registration component (MR) (e.g. with a check sum of all hardware IDs of the components) in the step of registering 5.

Based on the hierarchical representation of the target system the manual for the target system is generated in the step of generating 6. Thereto, each component is identified (e.g. based on its hardware ID) and a corresponding specification or manual of the component (component manual) is fetched from a database (e.g. from a central or decentralised repository/database) or the FS and integrated into the manual according to the location of the respective component in the hierarchical representation. The component manuals of the components of the target system may have been registered to the FS in an initial step of registering component manuals (not depicted) .

The generated manual is registered in a file storage (FS) (e.g. by a hash total of its content) in the step of registering 7 and subsequently stored in the FS in the step of storing 8.

In case an audit trail has to be conducted, an audit trail documentation is generated based on a history of the hierarchical representations of the target system registered in the MR in the step of generating 9.

The audit trail documentation is stored in the FS in the step of storing 10.

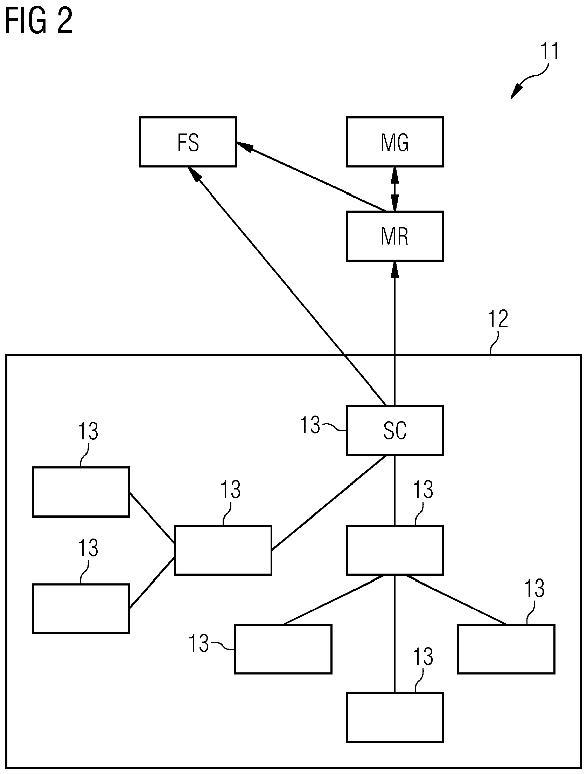

In Fig. 2 the system 11 for automatically generating manuals for target systems is schematically depicted. The system 11 comprises a system component (SC), a manual registration component (MR), a manual generation component (MG), a file storage (FS), a manual component (MC) and an audit trail generation component (AG).

The SC is arranged and configured for exploring the component tree of a target system 12 by exploring each component 13 of the target system and for storing the explored component tree in the FS. Further, the SC derives a hierarchical representation of a target system 12 by means of traversing hierarchically through the component tree of the target system 12 and registers the hierarchical representation to the MR. Here, the SC comprises at least one root hardware component 13 of the target system 12. The at least one root component 13 comprised by the SC can identify all hardware components 13 connected to itself based on their hardware IDs. The root component 13 identifies each single component 13 and their location within the target system 12. Starting from the root component 13 of the target system 12, each component 13 of the next or rather subsequent layer of the target system 12 is explored on their unique hardware ID.

The MG is arranged and configured for generating a manual for the target system 12 based on the hierarchical representation stored in the MR and specifications of components of the target system (e.g. from a repository/database of the specifications). The MG stores the generated manual for the target system in the FS.

The AG is arranged and configured for generating an audit trail documentation for the target system 12 based on a history of the hierarchical representations of the target system 12 registered in the MR. Based on the hierarchical representations of the target system the respective composition of the target system (and the respective date and time) can be tracked in the audit trail documentation. Further, the audit trail documentation may include a history, updates, revisions and change owners.

The MG stores the generated audit trail documentation for the target system in the FS.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In the foregoing detailed description, various features are grouped together in one or more examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects. In the context of the present description and claims the conjunction "or" is to be understood as including ("and/or") and not exclusive ("either ... or") .

## Claims

1. A computer-implemented method of generating automatically a manual for a target system (12), comprising the steps of:
- deriving (4) a hierarchical representation of the target system (12) by means of traversing hierarchically through a component tree of the target system (12) ;
- registering (5) the hierarchical representation to a manual registration component, MR;
- generating (6) the manual for the target system (12) based on the hierarchical representation stored in the manual registration component, MR, and specifications of components (13) of the target system (12); and
- storing (8) the generated manual for the target system (12) in a file storage, FS.

2. The computer-implemented method according to claim 1, further comprising the steps of:
- detecting (1) whether a composition of the target system (12) is changed; and
- executing the steps of deriving (4) the hierarchical representation, registering (5) the hierarchical representation, generating (6) the manual and storing (8) the generated manual each time a change of the composition of the target system (12) is detected.

3. The computer-implemented method according to claim 1 or 2, further comprising the step of:
- registering component manuals for components of the target system (12) to the file storage, FS.

4. The computer-implemented method according to claim 3, wherein the step of registering the component manuals for the components of the target system is based on a hash total of the content of the respective component manuals.

5. The computer-implemented method according to any preceding claim, further comprising the steps of:
- exploring (2) the component tree of the target system (12); and
- storing (3) the explored component tree of the target system (12).

6. The computer-implemented method according to any preceding claim, wherein the method is executed for multiple target systems (12), wherein the target systems (12) are owned by different entities.

7. The computer-implemented method according to any preceding claim, further comprising the steps of:
- generating (9) an audit trail documentation for the target system (12) based on a history of the hierarchical representations of the target system (12) registered in the manual registration component, MR; and
- storing (10) the generated audit trail documentation for the target system (12) in the file storage, FS.

8. A system (11) for generating automatically a manual for a target system (12) arranged and configured for executing the computer-implemented method of claim 1, comprising:
- a system component, SC, arranged and configured for deriving a hierarchical representation of the target system (12) by means of traversing hierarchically through a component tree of the target system (12);
- a manual registration component, MR, wherein the system component, SC, is further arranged and configured for registering the hierarchical representation to the manual registration component, MR;
- a manual generation module, MG, arranged and configured for generating the manual for the target system (12) based on the hierarchical representation stored in the manual registration component, MR, and specifications of components (13) of the target system (12); and
- a file storage, FS, wherein the manual generation module, MG, is further arranged and configured for storing the generated manual for the target system (12) in the file storage, FS.

9. The system (11) according to claim 8, further arranged and configured for executing the computer-implemented method according to claim 2, wherein the system component, SC, is further arranged and configured for detecting whether a composition of the target system (12) is changed.

10. The system (11) according to claim 8 or 9, further arranged and configured for executing the computer-implemented method according to claim 3 or 4 and further comprising:
- a manual component, MC, arranged and configured for registering the manual for the target system (12) to the file storage, FS.

11. The system (11) according to any of claims 8 to 10, further arranged and configured for executing the computer-implemented method of claim 5, wherein the system component, SC, is further arranged and configured for exploring the component tree of the target system (12) and for storing the explored component tree of the target system (12).

12. The system (11) according to any of claims 8 to 11, further arranged and configured for executing the computer-implemented method according to claim 6.

13. The system (11) according to any of claims 8 to 12, further arranged and configured for executing the computer-implemented method according to claim 7, further comprising:
- an audit trail generation component, AG, arranged and configured for generating an audit trail documentation for the target system (12) based on a history of the hierarchical representations of the target system (12) registered in the manual registration component, MR,
wherein the manual generation module, MG, is further arranged and configured for storing the generated audit trail documentation for the target system (12) in the file storage, FS.

14. The system (11) according to any of claims 8 to 13, wherein the system component, SC, comprises at least one hardware component (13) of the target system (12) and/or a software component running on at least one hardware component (13) of the target system (12) capable of identifying all hardware components (13) of the target system (12).

15. The system (11) according to claim 14, wherein the system component, SC, comprises at least one root hardware component (13) of the target system (12), wherein each hard ware component (13) of the target system (12) comprises an unique hardware identifier, wherein the at least one root component (13) can identify all hardware components (13) connected to itself based on their unique hardware identifiers.
